# EUROPÄISCHE PATENTSCHRIFT

(11) **EP 3 765 313 B1**
(45) Veröffentlichungstag und Bekanntmachung des Hinweises auf die Patenterteilung: **30.03.2022**
(21) Anmeldenummer: 19705107.1
(22) Anmeldetag: 30.01.2019
(51) Int. Cl.: B60C 11/16

(54) **SPIKE-REIFEN**
STUDDED TYRE
PNEU CLOUTÉ

(30) Priorität: 15.03.2018 DE 102018106021
(43) Veröffentlichungstag der Anmeldung: 20.01.2021
(73) Patentinhaber: SITEK-Spikes GmbH & Co. KG, 78733 Aichhalden (DE)
(72) Erfinder: VOGLER, Falko, 77761 Schiltach (DE)
(74) Vertreter: Herrmann, Jochen
(86) Internationale Anmeldenummer: PCT/EP2019/052289
(87) Internationale Veröffentlichungsnummer: WO 2019/174810

(56) Entgegenhaltungen:
- EP-A1- 1 199 193
- EP-A1- 3 208 115
- EP-A1- 3 222 441
- DE-A1-102014 205 353
- DE-A1-102016 212 280

## Beschreibung

Die Erfindung betrifft einen Reifen mit einer profilierten Lauffläche, mit einer bei montiertem Reifen zur Fahrzeugaußenseite hin ausgerichteten äußeren Reifenflanke und einer zur Fahrzeugseite hin ausgerichteten inneren Reifenflanke, wobei die äußere Reifenflanken an einen äußeren Laufflächenbereich der Lauffläche und die innere Reifenflanke an einen quer zur Drehrichtung des Reifens mittelbar oder unmittelbar neben dem äußeren Laufflächenbereich angeordneten inneren Laufflächenbereich der Lauffläche angrenzt, wobei in die Lauffläche des Reifens Spikes eingebettet sind, von denen jeweils ein Spikepin über die Lauffläche hervorsteht.

Aus der WO 2017/102115 A1 ist ein Fahrzeugluftreifen mit einer profilierten Lauffläche, in die Spikes eingebettet sind, bekannt. Jeder Spike ist aus einem Spikefuß, einem Spikekörper und einem Spikepin gebildet, welcher über die Lauffläche des Fahrzeugluftreifens hervorsteht. Der Spikefuß und der Spikekörper sind in dem Reifen eingebettet. Die Spikes sind in Querrichtung oder in Umfangsrichtung der Lauffläche oder in Vertikalrichtung zur Lauffläche des Fahrzeugluftreifens betrachtet asymmetrisch ausgebildet. Durch die asymmetrische Ausbildung der Spikes kann deren Bettungssteifigkeit in der Gummimatrix des Reifens richtungsabhängig beeinflusst werden. Dadurch wird beispielsweise erreicht, dass sich die Spikes bei einer Traktion stärker neigen als beim Bremsen, wodurch der Eingriff in Eis verbessert wird. Auch kann die Bettungssteifigkeit quer zur Laufrichtung unterschiedlich zu der in Laufrichtung ausgebildet sein, wodurch bei gleichbleibender Traktions- und Bremskraft die Seitenführung gezielt verbessert werden kann.

Die WO 2014/122570 A1 beschreibt einen Reifen mit Spikes. Die Spikepins sind in Draufsicht asymmetrisch ausgebildet. Sie weisen entlang ihrer beiden Längsseiten eine ebene und gegenüberliegend eine gezahnte Kontur auf. Die gezahnten Konturen der Spikes können in oder entgegen der Rollrichtung des Reifens ausgerichtet sein, wodurch ihr Eingriff in eine Eisdecke beim Bremsen oder beim Beschleunigen optimiert werden kann. Die Seitenführung des Reifens wird durch die gezahnte Kontur und die Ausrichtung der Spikes nicht verbessert.

Die in der WO 2014/072853 beschriebenen Spikes sind asymmetrisch ausgebildet. Ihre im Querschnitt trapezförmig ausgebildeten Spikekörper weisen jeweils eine Vorder- und eine Rückseite auf, welche in etwa parallel zur Drehachse des Reifens ausgerichtet sind. Die Flächen der Vorderseiten sind größer ausgebildet als die der Rückseiten. Oszillierende Bewegungen der Spikes, welche zu einem Verlust der Spikes führen können, können dadurch vermieden werden.

Aus der EP 2 540 527 A1 ist ein Spike für einen Reifen mit einem Spikefuß, einem Mittelteil, einem Spikekopf und einem Spikepin bekannt. Der Mittelteil ist gegenüber dem Spikekopf und dem Spikefuß verjüngt ausgebildet. Der Spikefuß, das Mittelteil und der Spikekopf weisen im Querschnitt im Wesentlichen dreieckige Grundformen auf. Der Spikepin ist in verschiedenen Ausführungen unterschiedlich ausgebildet und weist in Draufsicht unterschiedliche Querschnitte mit geradlinig und abgerundet verlaufenden Bereichen auf. Dabei sind der Spikefuß, das Mittelteil, der Spikekopf und der Spikepin derart ausgebildet, dass ihre Schwerpunkte zumindest teilweise quer zur Längserstreckung des Spikes versetzt zueinander angeordnet sind. Die Spikes sind nicht rotationssymmetrisch ausgebildet. Sie können derart orientiert am Reifen angeordnet sein, dass jeweils eine möglichst lange und ausgeprägte Kante der Spikepins deren Vorderkanten bildet. Dabei können die Vorderkanten geradlinig, konvex oder konkav gebogen ausgeführt sein. Durch diese Ausbildung der Spikes kann das Brems- und Traktionsverhalten des Reifens, jedoch nicht seine Seitenführung, verbessert werden.

Die DE 10 2014 205353 A1 beschreibt Spikes für Fahrzeugreifen sowie Fahrzeugreifen, in deren Laufstreifen derartige Spikes eingebettet sind. Die Spikepins können dabei in einer Draufsicht die Gestalt eines gleichschenkligen, an einem Eck abgeschnittenen Dreiecks mit einer Symmetrieebene aufweisen. Die Symmetrieebene ist dabei bevorzugt in Querrichtung des Laufstreifens ausgerichtet. Bei der Verwendung an Fahrzeugreifen mit asymmetrisch ausgeführten Laufstreifen werden die Spikepins im der Fahrzeuglängsachse abgewandten Außenbereich des Laufstreifens so angeordnet, dass ihre breiteren Seiten dem Laufstreifenrand näher sind.

Aus der DE 10 2016 212280 A1 sind Fahrzeugreifen mit Laufstreifenprofil und Spikes bekannt. Hierbei sind in zwei axial seitlichen Erstreckungsabschnitten des Laufstreifenprofils ausschließlich erste Spikes und in einem zwischen den seitlichen Erstreckungsabschnitten befindlichen axial mittleren Erstreckungsabschnitt ausschließlich zweite Spikes ausgebildet. Eine vorgeordnete Griffkante und eine nachgeordnete Griffkante der Spikespitze der ersten Spikes sind symmetrisch zu einer Symmetrieebene angeordnet. Seitlich wird die Spikespitze der ersten Spikes durch zwei seitliche Griffkantenabschnitte abgeschlossen. Die ersten Spikes sind im axial seitlichen Erstreckungsabschnitt des Laufstreifenprofils so angeordnet, dass ihre in Umfangsrichtung des Reifens gemessen längeren seitlichen Griffkantenabschnitte der äußeren Reifenflanke zugewandt sind.

Es ist Aufgabe der Erfindung, einen Reifen bereitzustellen, welcher eine verbesserte Seitenführung bei durch Schnee bzw. Eis glatten Straßen aufweist.

Die Aufgabe der Erfindung wird durch einen Reifen gemäß Anspruch 1 gelöst.

Bei einer Kurvenfahrt wirkt durch die Fliehkraft und die sich daraus ergebende Neigung eines Fahrzeugs eine größere Last auf das kurvenäußere Rad. Die auftretenden Zentrifugalkräfte werden durch die Laufflächen der Reifen und durch die in die Eis- oder Schneedecke eingreifenden Spikes aufgefangen. Die längeren, der äußeren Reifenflanke zugewandten Seiten der Spikes bewirken bei dem kurvenäußeren und damit stärker belasteten Reifen eine verbesserte seitliche Führung. Durch die hohen an diesem Reifen auftretenden Kräfte wird auch eine vergleichsweise lange Kante eines Spikes tief in beispielsweise eine Eisschicht eingedrückt. Die Fliehkräfte werden dann von der langen Kante des Spikes und damit über eine vergleichsweise große Fläche auf das Eis übertragen. Dadurch verringern sich die Flächenpressung und damit die Verformung des Eises am Eingriffspunkt des Spikes in Richtung der wirkenden Fliehkräfte, wodurch eine gute seitliche Führung des Reifens erreicht wird. Am weniger stark belasteten kurveninneren Reifen weisen die kürzeren Kanten der Spikepins in Richtung der auftretenden Zentrifugalkräfte. Die kürzeren Kanten dringen auch bei den dort auftretenden, geringeren zum Boden hin gerichteten Kräften tief in eine Eisschicht ein und führen damit zu einer guten seitlichen Führung des Reifens. Eine gute Seitenführung bei wechselnder Kurvenfahrt wird dadurch erreicht, dass die in dem inneren Laufflächenbereich angeordneten Spikepins spiegelbildlich zu den in dem äußeren Laufflächenbereich angeordneten Spikepins ausgebildet und/oder ausgerichtet sind. Ein Reifen weist somit in seinem äußeren Laufflächenbereich Spikepins auf, deren verlängerte Kanten zur äußeren Reifenflanke hin gerichtet sind, während die längeren Kanten der in seinem inneren Laufflächenbereich angeordneten Spikepins zur inneren Reifenflanke hin weisen. Es weisen somit sowohl bei einer Links- als auch bei einer Rechtskurve im jeweils stärker belasteten Laufflächenbereich des Reifens Spikepins mit ihren verlängerten Kanten in Richtung der wirkenden Zentrifugalkräfte und greifen mit den genannten Vorteilen in eine Schnee- oder Eisschicht ein. Vorteilhaft kann ein solcher Reifen bei geeigneter Profilierung auf beiden Fahrzeugseiten montiert werden. Ein weiterer Vorteil ergibt sich daraus, dass nur ein Spiketyp verwendet ist, wodurch die Herstellkosten des Reifens gering gehalten werden.

Bei einer Kurvenfahrt erfolgt durch die Verformung des Reifens die höchste Belastung im äußeren Laufflächenbereich des äußeren Reifens. Daher kann die seitliche Führung bereits dadurch verbessert werden, dass bei den in dem äußeren Laufflächenbereich angeordneten Spikes die in Umfangsrichtung des Reifens gemessene Erstreckung der der äußeren Reifenflanke zugewandten Außenseiten der Spikepins größer ist als die in Umfangsrichtung gemessene Erstreckung der der inneren Reifenflanke zugewandten Innenseiten der Spikepins.

Bevorzugt kann es vorgesehen sein, dass die Spikepins jeweils nur eine Symmetrieebene aufweisen. Durch die Symmetrieebene ist es möglich, gleiche Spikes für gegenüberliegende Reifen zu verwenden. Vorzugsweise teilt die Symmetrieebene die Außenseite und die Innenseite des Spikepins.

Mögliche Erfindungsvarianten sehen vor, dass die Symmetrieebenen der Spikepins senkrecht zur Laufrichtung des Reifens ausgerichtet sind oder dass die Symmetrieebenen in einem Winkel α zwischen 30° und 90°, besonders bevorzugt zwischen 45° und 90°, zur Laufrichtung des Reifens ausgerichtet sind. Die Laufrichtung gibt dabei die Bewegungsrichtung der Lauffläche des Reifens um dessen Drehachse bei einer Vorwärtsfahrt an. Durch eine Ausrichtung der Symmetrieebenen senkrecht zur Laufrichtung ergibt sich eine parallele Ausrichtung der verlängerten Außenseiten der Spikepins zur Laufrichtung des Reifens, welche eine optimierte Seitenführung des Reifens bewirkt. Bei einer, bezogen auf die Laufrichtung des Reifens, schrägen Anordnung der Symmetrieebenen können die Außenseiten der Spikepins derart angeordnet werden, dass bei einer Beschleunigung die Kraftübertragung von dem Reifen und den daran angeordneten Spikes auf den Untergrund verbessert wird.

Eine Optimierung der Haftung des Reifens in bzw. entgegen seiner Laufrichtung kann dadurch erreicht werden, dass die Spikepins keine Symmetrieebenen aufweisen. Die in Laufrichtung ausgerichtete Seite eines Spikepins kann so abweichend zu der entgegen der Laufrichtung ausgerichteten Seite ausgebildet werden. Damit kann der Eingriff des Spikes in Schnee bzw. Eis für einen Bremsvorgang und für einen Beschleunigungsvorgang optimiert werden. Entsprechend einer besonders bevorzugten Ausgestaltungsvariante der Erfindung kann es vorgesehen sein, dass die Spikepins der auf gegenüberliegenden Seiten eines Fahrzeugs zu montierenden Reifen spiegelbildlich zueinander angeordnet sind. Bei Reifen ohne durch ihre Profilierung vorgegebener Laufrichtung und Spikepins mit einer Symmetrieebene können die Reifen vorteilhaft auf beiden Fahrzeugseiten montiert werden. Sind Spikepins ohne Symmetrieebene verwendet, wird durch die Anordnung der Spikes mit ihren Spikepins ein laufrichtungsgebundener Reifen erhalten.

Ist es vorgesehen, dass die der äußeren Reifenflanke zugewandten Außenseiten der Spikepins parallel zur Laufrichtung des Reifens ausgerichtet sind oder dass die der äußeren Reifenflanke zugewandten Außenseiten der Spikepins in einem Winkel β zur Laufrichtung des Reifens ausgerichtet sind, vorzugsweise das die der äußeren Reifenflanke zugewandten Außenseiten der Spikepins in einem Winkel β zwischen 0 und 60°, besonders bevorzugt zwischen 0° und 45°, zur Laufrichtung des Reifens ausgerichtet sind, so können die Haftungseigenschaften eines Reifens optimal an die jeweiligen Anforderungen angepasst werden. Bei parallel zur Laufrichtung des Reifens ausgerichteten Außenseiten der Spikepins wird eine optimierte Seitenführung erreicht. Durch eine schräge Anordnung der Außenseiten, bezogen auf die Laufrichtung des Reifens, kann die Haftung des Reifens für einen Beschleunigungs- oder Bremsvorgang verbessert werden.

Um die Seitenführung des Reifens für eine wechselnde Kurvenfahrt zu optimieren ist bei den in dem inneren Laufflächenbereich angeordneten Spikes die in Umfangsrichtung des Reifens gemessene Erstreckung der der inneren Reifenflanke zugewandten Außenseiten der Spikepins größer, als die in Umfangsrichtung gemessene Erstreckung ihrer dem äußeren Laufflächenbereich zugewandten Innenseiten.

Die Haftungseigenschaften des Reifens können weiterhin dadurch verbessert werden, dass der Reifen durch eine unterschiedliche Profilierung des inneren und des äußeren Laufflächenbereichs asymmetrisch ausgebildet ist. Durch eine solche Ausbildung des Profils wird eine hohe Kurvenstabilität erreicht. Diese kann durch die Ausbildung und Ausrichtung der Spikes gemäß eines erfindungsgemäßen Reifens auch für vereiste Fahrbahnen erreicht werden.

Um einen Reifen auf beiden Fahrzeugseiten verwenden zu können kann es vorgesehen sein, dass der Reifen durch eine zueinander spiegelbildlich ausgebildete Profilierung des inneren und des äußeren Laufflächenbereichs symmetrisch ausgebildet ist. Vorzugsweise sind bei einem solchen Reifen auch die Spikes und ihre Spikepins symmetrisch ausgebildet, sodass der Reifen auf beiden Seiten eines Fahrzeugs verwendet werden kann. Werden asymmetrische Spikepins verwendet, so wird ein laufrichtungsgebundener Reifen erhalten.

Entsprechend einer möglichen Erfindungsvariante kann es vorgesehen sein, dass zwischen dem äußeren und dem inneren Laufflächenbereich ein mit Spikes versehener Übergangsbereich vorgesehen ist und dass die Form und/oder die Ausrichtung der Spikepins der in dem Übergangsbereich angeordneten Spikes von der Form und/oder der Ausrichtung der Spikepins der in dem äußeren und/oder dem inneren Laufflächenbereich angeordneten Spikes abweicht. In einem erfindungsgemäßen Reifen sind im inneren und im äußeren Laufflächenbereich Spikes mit Spikepins angeordnet sein, welche zu den jeweils angrenzenden Reifenflanken hin verlängerte Außenseiten aufweisen, um die Kurvenstabilität zu verbessern. Im Übergangsbereich können Spikepins mit mehreren Symmetrieebenen, beispielsweise Spikepins mit rechteckigen, runden oder ovalen Querschnitten, verwendet sein, um eine optimierte Kraftübertragung beim Bremsen und Beschleunigen zu erreichen. Die Kraftübertragung kann durch eine angepasste Profilierung der verschiedenen Bereiche der Lauffläche des Reifens weiter verbessert werden.

Vorteilhaft kann es vorgesehen sein, dass alle in dem äußeren Laufflächenbereich angeordneten Spikes gleich ausgebildet und ausgerichtet sind und/oder dass alle in dem inneren Laufflächenbereich angeordneten Spikes gleich ausgebildet und ausgerichtet sind und/oder dass alle in dem Übergangsbereich angeordneten Spikes gleich ausgebildet und ausgerichtet sind. Die Wirkung der Spikes kann so in den verschiedenen Bereichen der Lauffläche des Reifens optimiert werden. Durch die jeweils gleiche Ausrichtung der Spikes und damit der Spikepins wird eine kostengünstige Herstellung des Reifens ermöglicht.

Die Erfindung wird im Folgenden anhand eines in den Zeichnungen dargestellten Ausführungsbeispiels näher erläutert. Es zeigen:
- Fig. 1: einen Teilbereich einer Lauffläche eines Reifens mit einer asymmetrischen Profilierung,
- Fig. 2: einen Teilbereich einer Lauffläche eines Reifens mit einer symmetrischen Profilierung,
- Fig. 3: einen ersten Spike mit einem symmetrischen Spikepin in einer perspektivischen Ansicht,
- Fig. 4: den in Fig. 3 gezeigten ersten Spike in einer ersten Ausrichtung in Draufsicht,
- Fig. 5: den in Fig. 3 und 4 gezeigten ersten Spike in einer zweiten Ausrichtung in Draufsicht,
- Fig. 6: einen zweiten Spike mit einem symmetrischen Spikepin in einer perspektivischen Ansicht,
- Fig. 7: den in Fig. 6 gezeigten zweiten Spike in einer ersten Ausrichtung in Draufsicht,
- Fig. 8: den in Fig. 6 und 7 gezeigten zweiten Spike in einer zweiten Ausrichtung in Draufsicht,
- Fig. 9: einen dritten Spike mit einem asymmetrischen Spikepin in einer perspektivischen Ansicht,
- Fig. 10: den in Fig. 9 gezeigten dritten Spike in einer ersten Ausrichtung in Draufsicht,
- Fig. 11: den in Fig. 9 und 10 gezeigten dritten Spike in einer zweiten Ausrichtung in Draufsicht,
- Fig. 12: einen vierten Spike mit einem asymmetrischen Spikepin in einer perspektivischen Ansicht,
- Fig. 13: den in Fig. 12 gezeigten vierten Spike in einer ersten Ausrichtung in Draufsicht,
- Fig. 14: den in Fig. 12 und 13 gezeigten vierten Spike in einer zweiten Ausrichtung in Draufsicht,
- Fig. 15: einen fünften Spike mit einem elliptisch ausgebildeten Spikepin,
- Fig. 16: in einer schematischen Darstellung in einer Ansicht von unten ein Fahrzeug mit vier Rädern und einer ersten Spikeanordnung bei der die Spikes in den Reifen nicht erfindungsgemäß angeordnet sind,
- Fig. 17: in einer schematischen Darstellung in einer Ansicht von unten das in Fig. 16 gezeigte Fahrzeug mit vier Rädern und einer zweiten Spikeanordnung bei der die Spikes in den Reifen nicht erfindungsgemäß angeordnet sind,
- Fig. 18: in einer schematischen Darstellung in einer Ansicht von unten das in Fig. 16 gezeigte Fahrzeug mit vier Rädern und einer ersten erfindungsgemäßen Spikeanordnung,
- Fig. 19: in einer schematischen Darstellung in einer Ansicht von unten das in Fig. 16 gezeigte Fahrzeug mit vier Rädern und einer zweiten erfindungsgemäßen Spikeanordnung,
- Fig. 20: in einer schematischen Darstellung in einer Ansicht von unten das in Fig. 16 gezeigte Fahrzeug mit vier Rädern und einer Spikeanordnung bei der die Spikes in den Reifen nicht erfindungsgemäß angeordnet sind, und
- Fig. 21: einen Ausschnitt einer Lauffläche eines Reifens mit einem schräg zu einer Laufrichtung des Reifens ausgerichteten Spike.

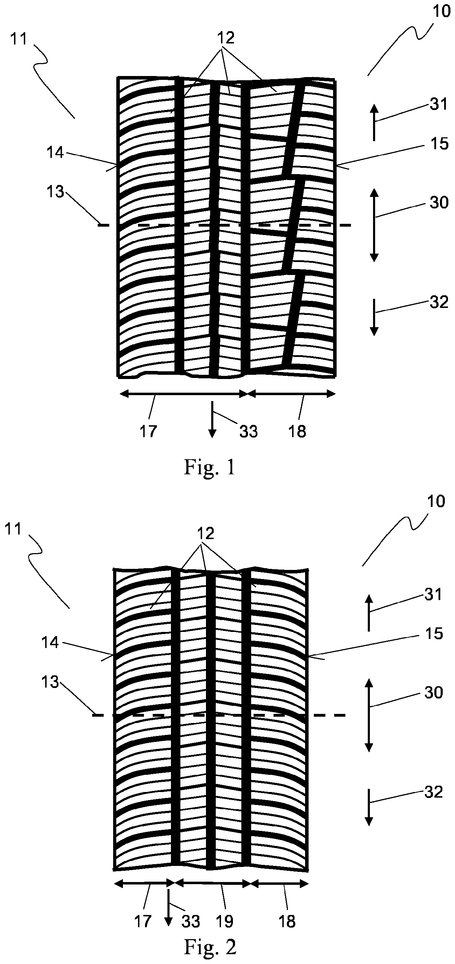

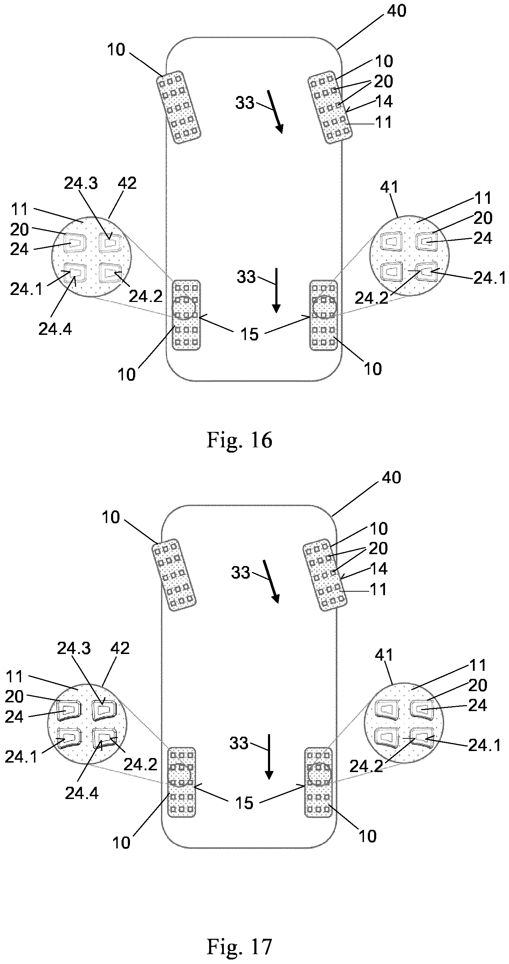

Fig. 1 zeigt einen Teilbereich einer Lauffläche 11 eines Reifens 10 mit einer asymmetrischen Profilierung. Der Reifen 10 ist um eine Drehachse 13 drehbar gelagert mit einem in Fig. 16 bis 20 gezeigten Fahrzeug 40 verbunden. Bei einer Drehung des Reifens 10 bewegt sich dessen Lauffläche 11 entlang einer durch einen Doppelpfeil gekennzeichneten Umfangsrichtung 30. Der Reifen 10 und das Fahrzeug 40 können so entlang einer Rückwärtsbewegung 31 oder einer Vorwärtsbewegung 32, die beide durch jeweils einen Pfeil gekennzeichnet sind, bewegt werden. Einer ebenfalls durch einen Pfeil gekennzeichnete Laufrichtung 33 entspricht der Bewegung der Lauffläche 11 bei einer Vorwärtsdrehung des Reifens 10 und damit einer Vorwärtsbewegung 32 des Fahrzeugs 40. die gewählte Zuordnung Zwischenlaufrichtung 33 und Vorwärtsbewegung 32 entspricht einem Blick von oben auf den Reifen 10.

Die Lauffläche 11 geht seitlich in eine äußeren Reifenflanke 14 und gegenüberliegend in eine innere Reifenflanke 15 über. Die innere Reifenflanke 15 ist bei montiertem Reifen 10 dem Fahrzeug 40 zugewandt, während die äußere Reifenflanke 15 vom Fahrzeug 40 weg weist. Zur Beschreibung der Erfindung ist die Lauffläche 11 in einen äußeren Laufflächenbereich 17 und einen inneren Laufflächenbereich 18 unterteilt. Dabei sind die Laufflächenbereiche 17, 18 nicht zwangsläufig an ein jeweils darin ausgebildetes Profil 12 gebunden. Eine Orientierung der Laufflächenbereiche 17, 18 an dem Profil 12 ist jedoch vorteilhaft. Der äußere Laufflächenbereich 17 grenzt an die äußere Reifenflanke 14, während der innere Laufflächenbereich 18 an die innere Reifenflanke 15 angrenzt. Die Laufflächenbereiche 17, 18 sind in dem Ausführungsbeispiel entlang einer in Umfangsrichtung 30 verlaufenden Trennebene voneinander getrennt angeordnet.

Der äußere und der innere Laufflächenbereich 17, 18 unterscheiden sich bei dem gezeigten asymmetrischen Reifen 10 durch ihr Profil 12, welches durch entsprechende Linien beispielhaft und schematisch dargestellt ist.

Asymmetrische Reifen 10 weist eine definierte Montagerichtung auf einer Felge mit einer vorgegebenen Außen- und Innenseite auf.

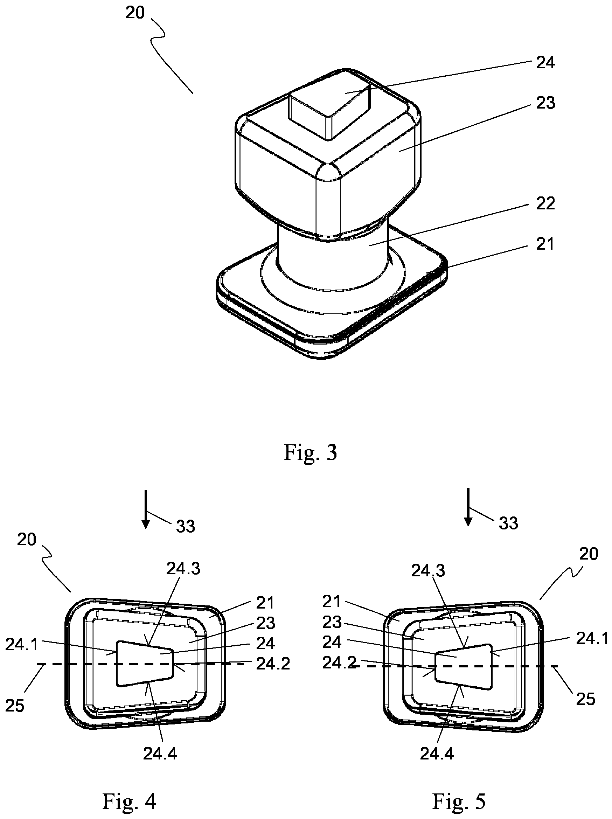

In der Lauffläche 11 sind nicht dargestellt Spikes 20, wie sie in den Fig. 3 bis 21 gezeigt sind, gehalten.

Fig. 2 zeigt einen Teilbereich einer Lauffläche 11 eines Reifens 10 mit einer symmetrischen Profilierung. Es sind die gleichen Bezeichner wie zu Fig. 1 eingeführt verwendet. Das Profil 12 des Reifens 10 ist entlang einer in Umfangsrichtung verlaufenden Symmetriefläche symmetrisch ausgebildet. Die Symmetriefläche bildet die Mitte des Reifens 10 und der Lauffläche 11. Auch hier ist die Lauffläche 11 zur Beschreibung der Erfindung in einen äußeren Laufflächenbereich 17 und einen inneren Laufflächenbereich 18 aufgeteilt. Zwischen dem inneren und dem äußeren Laufflächenbereich 17, 18 ist ein Übergangsbereich 19 markiert. Vorliegend orientieren sich die Laufflächenbereiche 17, 18 und der Übergangsbereich 19 an dem Profil 12 der Lauffläche 11. Die Unterteilung kann jedoch auch beliebig anders vorgesehen sein oder es kann eine Unterteilung, die keinen Übergangsbereich 19 vorsieht, gewählt sein.

Symmetrische Reifen 10 können auf beiden Fahrzeugseiten montiert werden, sie weisen keine vorgegebene Laufrichtung auf.

In der Lauffläche 11 sind nicht dargestellt Spikes 20, wie sie in den Fig. 3 bis 21 gezeigt sind, gehalten.

Fig. 3 zeigt einen ersten Spike 20 mit einem symmetrischen Spikepin 24 in einer perspektivischen Ansicht. Der Spike 20 weist einen flächig ausgebildeten Spikefuß 21 auf, an den ein Mittelteil 22 einstückig angeformt ist. Das Mittelteil 22 ist zylinderförmig ausgebildet. Gegenüberliegend zu dem Spikefuß 21 schließt sich ein Spikekopf 23 einstückig verbunden an das Mittelteil 22 an. In dem Spikekopf 23 ist ein Spikepin 24 gehalten. Dazu weist der Spikekopf 23 eine Aufnahme auf, in die der Spikepin 24 eingesetzt ist. Der Spikepin 24 steht über die dem Mittelteil 22 gegenüberliegende Oberfläche des Spikekopfes 23 über.

Der Spikefuß 21, das Mittelteil 22 und der Spikekopf 23 bilden eine Hülse des Spikes 20. Sie sind aus einem vergleichsweise weichen Material, beispielsweise aus einem Metall, insbesondere aus Stahl oder Aluminium, gefertigt. Es ist auch denkbar, den Spikefuß 21, das Mittelteil 22 und den Spikekopf 23 aus einem Kunststoff herzustellen. Der Spikepin 24 ist aus einem Hartwerkstoff gebildet. Vorzugsweise ist der Spikepin 24 aus Hartmetall, beispielsweise aus Wolframcarbid, gebildet.

Zur Montage wird die Hülse des Spikes 20 in dafür vorgesehene Aufnahmen in der in Fig. 1 und 2 gezeigten Lauffläche 11 eines Reifens 10 eingesetzt. Dabei verankert sich der Spike 20 durch seine Formgebung in der Aufnahme. Der Spike 20 ist derart in die Aufnahme eingesetzt, dass lediglich der Spikepin 24 über die Lauffläche 11 des Reifens 10 herausragt. Im Fahrbetrieb dringt somit der Spikepin 24 in eine Schnee- oder Eisschicht ein und verhindert dadurch ein Gleiten des Reifens 10.

Fig. 4 zeigt den in Fig. 3 gezeigten ersten Spike 20 in einer ersten Ausrichtung in Draufsicht. Der Spikepin 24 weist einen trapezförmigen Querschnitt auf. Seine Seitenflächen bilden eine Außenseite 24.1 und gegenüberliegend eine Innenseite 24.2 aus. Die Außenseite 24.1 und die Innenseite 24.2 sind mittels einer dritten und einer vierten Seite 24.3, 24.4 miteinander verbunden sind. Durch die Trapezform ergibt sich eine Symmetrieebene 25 des Spikepins 24. Die Symmetrieebene 25 verläuft jeweils durch die Mitte der Außenseite 24.1 und der Innenseite 24.2 des Spikepins 24. Die dritte und die vierte Seite 24.3, 24.4 sind spiegelsymmetrisch zu der Symmetrieebene 25 angeordnet. Der Spikepin 24 weist eine einzige Symmetrieebene 25 auf.

Auch der Spikekopf 23 und der Spikefuß 21 des Spikes 20 weisen einen trapezförmigen Querschnitt auf, der jeweils entsprechend dem Spikepin 24 ausgerichtet ist. Dies ist vorteilhaft, um den Spikepin 24 bei seiner Montage in einer gewünschten Ausrichtung in der Lauffläche 11 des Reifens 10 zu verankern. Es ist jedoch auch denkbar, den Spikefuß 21 und/oder den Spikekopf 23 mit einem anderen Querschnitt oder mit einer gegenüber dem Spikepin 24 anderen Ausrichtung bei einem trapezförmigen Querschnitt auszubilden.

Die Außenseite 24.1 des Spikepins 24 ist erfindungsgemäß in Umfangsrichtung des Spikepins 24 gemessen länger ausgebildet als seine Innenseite 24.2. Der Spike 20 wird gerichtet in die Lauffläche 11 des Reifens 10 eingesetzt. Dabei sind die Außenseite 24.1 in Richtung zu einer Reifenflanke 14, 15 des Reifens 10 und die Innenseite 24.2 zur gegenüberliegenden Reifenflanke 14, 15 hin ausgerichtet. Die Erstreckung der Außenseite 24.1 des Spikepins 24 ist somit in Umfangsrichtung des Reifens 10 größer als die Erstreckung der Innenseite 24.2. Die Laufrichtung 33 des Reifens 10 ist in der gewählten Darstellung durch einen Pfeil gekennzeichnet. Die Symmetrieebene 25 ist vorliegend senkrecht zur Laufrichtung 33 ausgerichtet. Dadurch liegen die Außenseite 24.1 und die Innenseite 24.2 des Spikepins 24 parallel zur Laufrichtung 33. Die Symmetrieebene 25 kann jedoch auch in einem Winkel zur Laufrichtung 33 ausgerichtet sein. Dadurch sind auch die Außenseite 24.1 und die Innenseite 24.2 gegenüber der Laufrichtung 33 schräg angeordnet.

Fig. 5 zeigt den in Fig. 3 und 4 gezeigten ersten Spike 20 in einer zweiten Ausrichtung in Draufsicht. Die in Fig. 5 gezeigte Ausrichtung des Spikes 20 ist, bezogen auf die Laufrichtung 33 des Reifens 10, spiegelsymmetrisch zu der in Fig. 4 gezeigten Ausrichtung. Gleiche Spikes 20 können somit spiegelverkehrt in einen oder in gegenüberliegend montierte Reifen 10 eingesetzt werden.

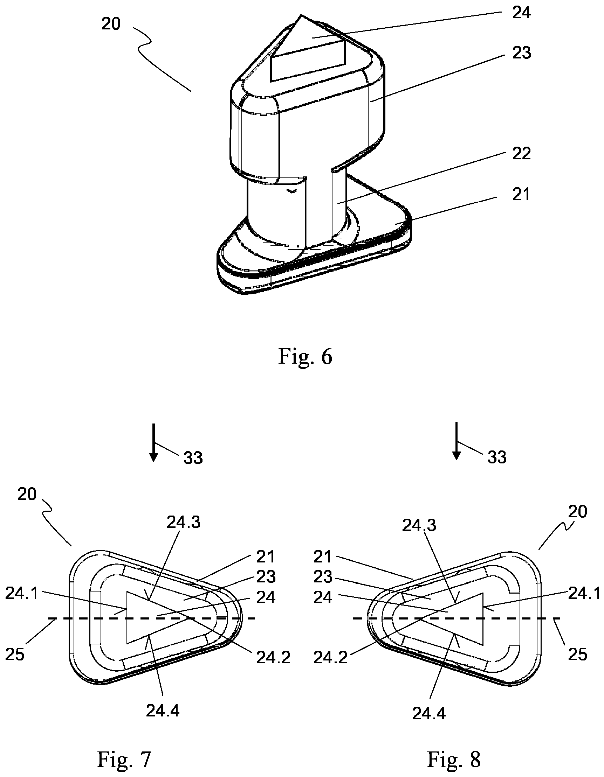

Fig. 6 zeigt einen zweiten Spike 20 mit einem symmetrischen Spikepin 24 in einer perspektivischen Ansicht. Auch der zweite Spike 20 weist einen Spikefuß 21, ein Mittelteil 22 und einen Spikekopf 23 auf, in den der Spikepin 24 eingesetzt ist. Die Herstellung, die Montage in einem Reifen 10 sowie die Funktion des Spikes 20 entsprechend der Beschreibung zu den Fig. 3 bis 5, auf die hiermit verwiesen wird.

Fig. 7 zeigt den in Fig. 6 gezeigten zweiten Spike 20 in einer ersten Ausrichtung in Draufsicht und Fig. 8 den in Fig. 6 und 7 gezeigten zweiten Spike 20 in einer zweiten Ausrichtung in Draufsicht. Der Spikepin 24 weist einen dreieckigen Querschnitt auf. Die Innenseite 24.2 des Spikepins 24 ist durch die Spitze des Dreiecks gebildet. Gegenüberliegend zu der Innenseite 24.2 ist die Außenseite 24.1 des Spikepins 24 angeordnet. Die Außenseite 24.1 bildet die Grundfläche des Dreiecks, während die dritte und die vierte Seite 24.3, 24.4 des Spikepins 24 die Schenkel des Dreiecks darstellen. Die Symmetrieebene 25 des Spikepins 24 verläuft von der die Innenseite 24.2 bildenden Spitze zu der Mitte der Außenseite 24.1. Sie ist quer zur Laufrichtung 33 des Reifens 10 angeordnet, sodass die Außenseite 24.1 und die Innenseite 24.2 wieder den gegenüberliegenden Reifenflanken 14, 15 (Fig. 1, Fig. 2) zugewandt sind. Der Spikepin 24 weist somit eine Symmetrieebene 25 auf. Dies ermöglicht es, gleiche Spikes 20, bezogen auf die Laufrichtung 33 des Reifens 10, spiegelverkehrt in einen oder in gegenüberliegend an einem Wagen montierte Reifen 10 anzuordnen, wie dies durch die in den Fig. 7 und 8 dargestellten Ausrichtungen des Spikes 20 gezeigt ist

Vorliegend sind auch der Spikefuß 21 und der Spikekopf 23 dreieckig ausgebildet, was eine einfache Ausrichtung des Spikepins 24 bei der Herstellung des Reifens 10 ermöglicht.

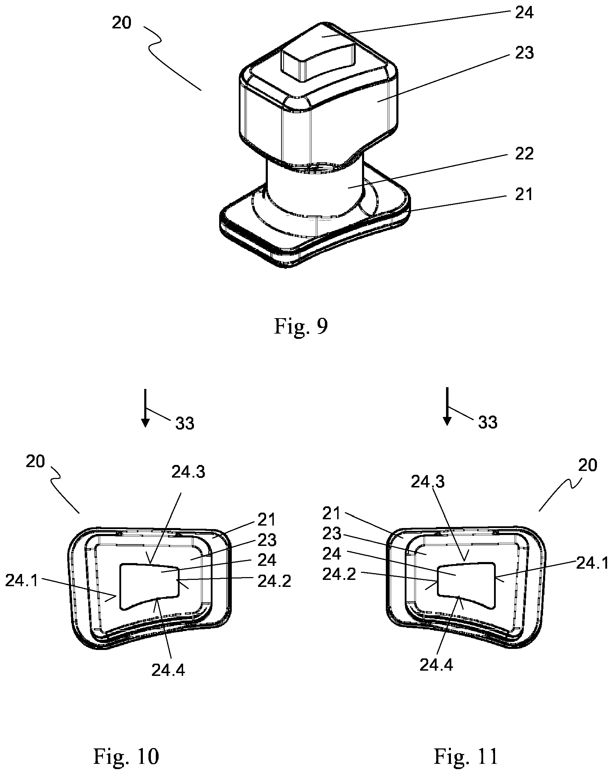

Fig. 9 zeigt einen dritten Spike 20 mit einem asymmetrischen Spikepin 24 in einer perspektivischen Ansicht.

Fig. 10 zeigt den in Fig. 9 gezeigten dritten Spike 20 in einer ersten Ausrichtung in Draufsicht und Fig. 11 den in Fig. 9 gezeigten dritten Spike 20 in einer zweiten Ausrichtung in Draufsicht. Der in Fig. 10 gezeigte Spike 20 ist, bezogen auf die Laufrichtung 33 des Reifens 10, spiegelbildlich zu dem in Fig. 11 gezeigten Spike 20 ausgebildet und ausgerichtet.

Der prinzipielle Aufbau und die Funktion des Spikes 20 entsprechend der Darstellung zu den Figuren 3 bis 9. Abweichend zu den bisher gezeigten Spikes 20 weist der in den Figuren 9 bis 11 gezeigte Spikepin 24 keine Symmetrieebene 25 auf. Die Erstreckung der Außenseite 24.1 des Spikepins 24 in Laufrichtung 33 des Reifens 10 ist größer als die in gleicher Richtung gemessenen Erstreckung seiner Innenseite 24.1. Die bei Vorwärtsfahrt vorauseilende dritte Seite 24.3 des Spikepins 24 verläuft quer zur Laufrichtung 33. Sie ist geringfügig konvex gewölbt. Die gegenüberliegende vierte Seite 24.3 des Spikepins 24 ist schräg zur Laufrichtung 33 und konkav gewölbt ausgebildet. Durch die unterschiedliche Ausbildung der dritten und vierten Seite 24.3, 24.4 des Spikepins 24 kann dessen Eingriff in eine Schnee- oder Eisschicht beim Bremsen und beim Beschleunigen optimiert werden. Durch die fehlende Symmetrieebene 25 kann der gleiche Spike 20 jedoch nicht in spiegelsymmetrischer Anordnung in einen oder in gegenüberliegend montierten Reifen 10 eingesetzt werden. Wie aus Fig. 10 und 11 zu entnehmen ist, sind für eine spiegelsymmetrische Anordnung von Spikes 20 entsprechend unterschiedliche, spiegelsymmetrisch zueinander ausgebildete Spikes 20 bzw. Spikes 20 mit spiegelbildlich zueinander ausgebildeten Spikepins 24 erforderlich.

In dem gezeigten Ausführungsbeispiel folgt die Kontur des Spikefußes 21 und des Spikekopfes 23 der Kontur des Spikepins 24. Dies erleichtert die korrekte Ausrichtung der Spikes 20 innerhalb der Lauffläche 11 des Reifens 10. Es ist jedoch auch denkbar, für den Spikefuß 21 und/oder den Spikekopf 23 eine von dem Querschnitt des Spikepins 24 abweichende Kontur vorzusehen.

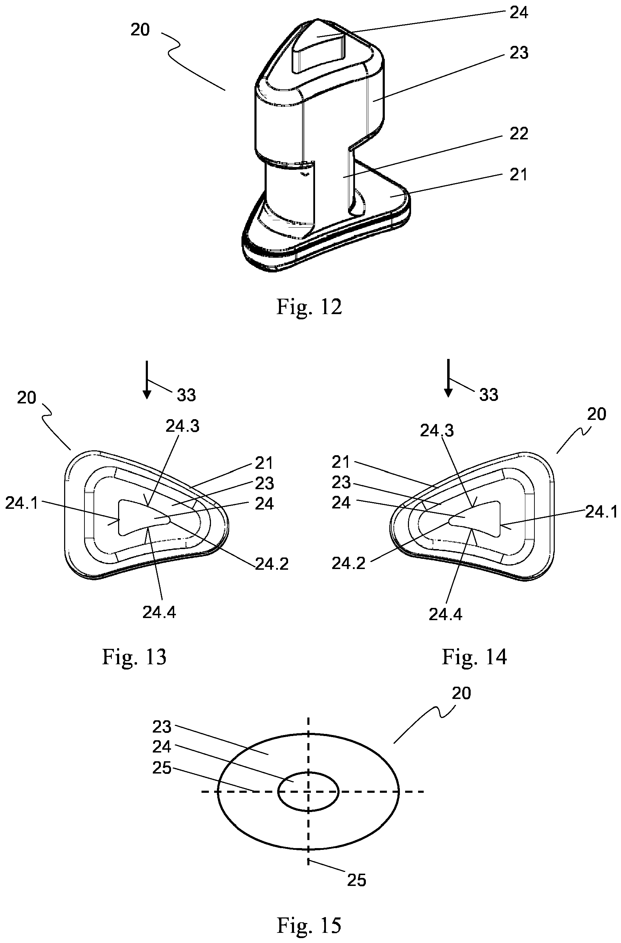

Fig. 12 zeigt einen vierten Spike 20 mit einem asymmetrischen Spikepin 24 in einer perspektivischen Ansicht.

Fig. 13 zeigt den in Fig. 12 gezeigten vierten Spike 20 in einer ersten Ausrichtung in Draufsicht und Fig. 14 den in Fig. 12 und 13 gezeigten vierten Spike 20 in einer zweiten Ausrichtung in Draufsicht. Dabei ist die in Fig. 13 gezeigte, zweite Ausrichtung spiegelsymmetrisch zu der in Fig. 12 gezeigten ersten Ausrichtung gewählt. Weiterhin ist die Kontur des in Fig. 13 gezeigten Spikes 20 bzw. Spikepins 24 spiegelbildlich zur Kontur des in Fig. 14 gezeigten Spikes 20 bzw. Spikepins 24 ausgeführt.

Auch hier entsprechen der prinzipielle Aufbau und die grundlegende Funktion des Spikes 20 den vorangegangenen Beschreibungen.

Der in den Fig. 12 bis 14 gezeigte Spikepin 24 weist keine Symmetrieebene 25 auf. Er weist einen im Wesentlichen dreieckigen Querschnitt auf, wobei die bei Vorwärtsfahrt vorauseilende dritte Seite 24.3 konvex und die nacheilende vierte Seite 24.4 konkav geformt sind. Durch diese Formgebung wird der Eingriff der Spikes 20 bei Brems- und Beschleunigungsvorgängen verbessert. Die Innenseite 24.2 des Spikepins 24 ist als abgerundete Kante ausgebildet. Der Innenseite 24.2 gegenüberliegend ist die Außenseite 24.1 des Spikepins 24 angeordnet. Diese erstreckt sich in Laufrichtung 33 des Reifens 20.

Entsprechend der Beschreibung zu dem in den Fig. 9 bis 11 gezeigten, asymmetrischen Spikepin 24 sind auch bei dem in den Fig. 12 bis 14 gezeigten, asymmetrischen Spikepin 24 für eine spiegelsymmetrische Anordnung von Spikes 20 auf einem Reifen 10 bzw. auf gegenüberliegend montierten Reifen 10 unterschiedliche, spiegelsymmetrisch zueinander ausgebildete Spikes 20 bzw. Spikes 20 mit spiegelbildlich zueinander ausgebildeten Spikepins 24 erforderlich. In dem gezeigten Ausführungsbeispiel folgt die Kontur des Spikefußes 21 und des Spikekopfes 23 der Kontur des Spikepins 24. Dies erleichtert die korrekte Ausrichtung der Spikes 20 innerhalb der Lauffläche 11 des Reifens 10. Es ist jedoch denkbar, für den Spikefuß 21 und/oder den Spikekopf 23 eine von dem Spikepin 24 abweichende Kontur vorzusehen.

Fig. 15 zeigt einen fünften Spike 20 mit einem elliptisch ausgebildeten Spikepin 24. Auch der Spikekopf 23 und der verdeckt angeordnete Spikefuß 21 sind elliptisch ausgeführt. Der Spike 20 bzw. der Spikepin 24 weisen somit zwei Symmetrieebenen 25 auf. Fig. 16 zeigt in einer schematischen Darstellung in einer Ansicht von unten ein

Fahrzeug 40 mit vier Rädern dargestellt sind, bei denen die mit Spikes gemäß einer ersten Anordnung versehenen Reifen nicht erfindungsgemäß ausgeführt sind.

Zur Verdeutlichung der Fahrtrichtung des Fahrzeuges 40 bei Vorwärtsfahrt sind die Vorderräder für eine Kurvenfahrt, vorliegend aufgrund der Darstellung von unten für eine Rechtskurve, eingeschlagen. Die in die Laufflächen 11 der Reifen 10 angesetzten Spikes 20 sind schematisch dargestellt. Die äußeren Reifenflanken 14 weisen von dem Fahrzeug 40 weg, während die inneren Reifenflanken 15 dem Fahrzeug 40 zugewandt sind. Die Laufrichtung 33 der hinteren und der eingeschlagenen vorderen Reifen 10 ist für eine Vorwärtsfahrt im Kontaktbereich der Reifen 10 auf dem Untergrund jeweils durch einen Pfeil angegeben.

An den Hinterrädern sind Ausschnitte 41, 42 der Laufflächen 11 der dort montierten Reifen 10 vergrößert gezeigt. Den Ausschnitten 41, 42 sind die Form und die Anordnung der Spikes 20 und deren Spikepins 24 in einer Draufsicht auf die Lauffläche 11 zu entnehmen.

Die in den Laufflächen 11 der Reifen 10 festgelegten Spikes 20 weisen Spikepins 24 mit einer Symmetrieebene 25 auf, wie diese in den Figuren 4, 5, 7 und 8 gezeigt sind. Dabei entspricht die Kontur des Spikepins 24 der Kontur des in den Figuren 3 bis 5 gezeigten Spikes 20. Die nachfolgende Beschreibung ist für beliebige andere Geometrien von entsprechend der Darstellung gemäß Fig. 16 angeordneten Spikepins 24 mit einer Symmetrieebene 25 zutreffend. Über die gesamte Lauffläche 11 jeweils eines Reifens 10 sind gleiche Spikes 20 mit gleichen Spikepins 24 angeordnet. Die Spikepins 24 sind innerhalb eines Reifens 10 gleich ausgerichtet. An den auf den gegenüberliegenden Seiten des Fahrzeugs 40 montierten Reifen 10 sind die Spikes 20, insbesondere der Spikepins 24, spiegelsymmetrisch angeordnet. Dies wird durch die Verwendung von Spikes 20 bzw. Spikepins 24 mit einer Symmetrieachse 25 ermöglicht. Durch die gewählte Anordnung weisen die Außenseiten 24.1 aller Spikepins 24 zu den jeweils äußeren Reifenflanken 14 und die Innenseiten 24.2 der Spikepins 24 entsprechend zu den jeweils inneren Reifenflanke 15 der Reifen 10. Die in den Figuren 4 und 5 gezeigten Symmetrieebenen 25 der Spikepins 24 sind quer, vorliegend senkrecht, zur Laufrichtung 33 der Reifen 10 ausgerichtet. Damit sind die Außenseite 24.1 und die Innenseite 24.2 des Spikepins 24 in Laufrichtung 33 ausgerichtet.

Bei einer Kurvenfahrt wirkt aufgrund der Fliehkraft und der dadurch bedingten Neigung des Fahrzeugs 40 eine größere Last auf das jeweils kurvenäußere Rad. Dadurch greifen die im Vergleich zu den Innenseiten 24.2 in Umfangsrichtung des Reifens 10 gemessen längeren Außenseiten 24.1 der Spikepins 24 tief in eine Schnee- oder Eisschicht ein. Die langen Außenseiten 24.1 bieten in Richtung der wirkenden Fliehkräfte eine vergleichsweise große Angriffsfläche für den Schnee bzw. das Eis. Dadurch wird eine gute Haftung des Reifens 10 quer zu seiner Rollrichtung und in Richtung der wirkenden Fliehkräfte erreicht. Auf dem weniger belasteten kurveninneren Rad reicht die Radlast noch aus, um die kürzeren Innenseiten 24. 2 der Spikepins 24 in das Eis bzw. in die Schneeschicht einzupressen. Somit wird auch für die kurveninneren Räder eine gute Seitenführung erreicht. Durch weiteres Verkürzen der Innenseite 24.2 hin zu einer schmalen Kante, wie diese für den in den Fig. 6 bis 8 gezeigten Spikes 20 gezeigt ist, kann die Kraft, die erforderlich ist, damit die Innenseite 24.2 eines am wenig belasteten, kurveninneren Reifen 10 angeordneten Spikepins 24 in eine Eisschicht eindringt, weiter reduziert werden.

Die bei Vorwärtsfahrt vorauseilenden dritten Seiten 24.3 und dazu entlang der Symmetrieebenen 24.2 gespiegelt angeordneten vierten Seiten 24.4 der in Fig. 16 gezeigten Spikepins 24 sind quer zur Laufrichtung 33 der Reifen 10 ausgerichtet. Sie bewirken eine gute Haftung des Reifens 10 bei Brems- und Beschleunigungsvorgängen.

Die Spikeanordnung kann für Reifen 10 mit verschiedenen Profilen 12 verwendet werden. Bei Verwendung an einem Reifen 10 mit laufrichtungsgebundenem symmetrischen Profil 12, wie er beispielhaft in Fig. 2 gezeigt ist, führen die gerichtet angeordneten Spikes 20 bzw. Spikepins 24 zu einer vorgegebenen Außen- und Innenseite des Reifens 10. Durch die Anordnung und Ausbildung der Spikes 20 wird somit ein asymmetrischer Reifen 10 erhalten. Der Reifen 10 muss entsprechend auf einer Felge derart montiert werden, dass die Außenseiten 24.1 der Spikepins 24 vom Fahrzeug 40 weg gerichtet sind. Ist die Laufrichtung des Reifens 10 ist jedoch nicht vorgegeben, so kann der Reifen 10 auf beiden Seiten des Fahrzeugs 40 verwendet werden kann.

Ist die in Fig. 16 gezeigte Spikeanordnung an einem Reifen 10 mit einem asymmetrischen Profil 12 vorgesehen, wie er beispielsweise in Fig. 1 gezeigt ist, so sind die Spikes 20 derart in die Lauffläche 11 einzusetzen, dass die Außenseiten 24.1 der Spikepins 24 in Richtung der durch das Profil 12 vorgegebenen und montiert vom Fahrzeug 40 weg weisenden äußeren Reifenflanke 14 hin ausgerichtet sind.

Durch ihre symmetrische Ausbildung können die Spikes in der gezeigten Anordnung auch für durch ihre Profilierung laufrichtungsgebundene Reifen 10 verwendet werden.

Fig. 17 zeigt in einer schematischen Darstellung in einer Ansicht von unten das in Fig. 16 gezeigte Fahrzeug 40 mit vier Rädern, bei denen die mit Spikes gemäß einer zweiten Anordnung versehenen Reifen nicht erfindungsgemäß ausgeführt sind.

Gleiche Bauteile sind wie zu Fig. 16 eingeführt bezeichnet.

Wie den vergrößerten Ausschnitten 41, 42 der Laufflächen 11 des rechten und des linken hinteren Reifens 10 zu entnehmen ist, sind in die Laufflächen Spikes 20 mit Spikepins 24 ohne Symmetrieebene 25 eingesetzt. Vorliegend entsprechen die verwendeten Spikes 20 dem in den Fig. 9 bis 12 dargestellten Spike 20, die nachfolgende Beschreibung ist jedoch auch für beliebige andere Geometrien von Spikepins 24 ohne Symmetrieebene 25 zutreffend. So ist es denkbar, Spikes 20 entsprechend der Darstellung in den Fig. 12 bis 14 zu verwenden.

Die Spikes 20 und damit die Spikepins 24 sind innerhalb eines Reifens 10 gleich ausgerichtet, so dass die längeren Außenseiten 24.1 der Spikepins 24 zur äußeren Reifenflanke 14 und die gegenüberliegenden, kürzeren Innenseiten 24.2 der Spikepins zur inneren Reifenflanke 15 weisen. Die Spikes 24 an gegenüberliegend am Fahrzeug 40 montierten Reifen 10 sind spiegelsymmetrisch zueinander ausgerichtet. Da die Spikes 20 bzw. die Spikepins 24 keine Symmetrieebene aufweisen, sind auf den gegenüberliegend an dem Fahrzeug 40 montierten Reifen 10 spiegelbildlich geformte Spikes 20 bzw. Spikepins 24 vorgesehen. Die konkav geformte vierte Seite 24.4 der Spikepins 24 ist daher immer entgegen der Drehrichtung der Reifen 10 ausgerichtet. Entsprechend ist die in etwa geradlinig bzw. gering gewölbt verlaufende dritte Seite 24.3 der Spikepins 24 in Drehrichtung der Reifen 10 ausgerichtet. Durch die bei Spikepins 24 ohne Symmetrieebene 25 mögliche, voneinander unabhängige Formgebung der dritten und der vierten Seite 24.3, 24.4 der Spikepins 24 kann das Eingriffsverhalten der Spikes 20 in eine Schnee- bzw. Eisschicht für einen Bremsvorgang und einen Beschleunigungsvorgang separat optimiert werden. Die in Umfangsrichtung des Reifens 10 gegenüber den Innenseiten 24.2 verlängert ausgebildeten Außenseiten 24.1 der Spikepins 24 bewirken an dem kurvenäußeren Rad eine optimale Seitenführung. Durch die verkürzt ausgebildeten Innenseiten 24. 2 greifen auch die an dem geringer belasteten, kurveninneren Reifen 10 angeordneten Spikepins 24 tief in eine Schnee- oder Eisschicht ein und führen zu einer guten Haftung des Reifens 10.

Die in Fig. 17 gezeigte Spikeanordnung mit Spikepins 24 ohne Symmetrieebene 25 kann bei Reifen 10 mit verschiedenen Profilen 12 eingesetzt werden. Durch die Anordnung der asymmetrischen Spikes 20 wird sowohl bei einem Reifen 10 mit einem symmetrischen Profil 12 als auch bei einem Reifen 10 mit einem asymmetrischen Profil 12 dessen Laufrichtung 33 vorgegeben. Es ergibt sich so ein laufrichtungsgebundener asymmetrischer Reifen 10. Wird die Spikeanordnung auf einem bereits durch sein Profil 12 laufrichtungsgebundenen Reifen 10 eingesetzt, so ist darauf zu achten, dass die durch das Profil 12 vorgegebene Laufrichtung 33 und die durch die Spikes 20 vorgegebene Laufrichtung 33 des Reifens 10 übereinstimmen.

Sowohl bei der in Fig. 16 wie auch bei der in Fig. 17 gezeigten Spikeanordnung können die in Laufrichtung 33 des Reifens 10 gemessenen Längen der Innenseiten 14.2 der Spikepins 24 an die erwartete Belastung und damit die Anforderungen beim Fahrbetrieb angepasst werden. So können die Längen der Innenseiten 24.2 bis hin zu scharfen oder abgerundeten Kanten, wie diese in den Fig. 6, 7, 8 und Fig. 12, 13, 14 gezeigt sind, reduziert werden, sodass sie auch bei geringer Belastung des Reifens 10 in einer Kurvenfahrt gut in eine Eisschicht eindringen.

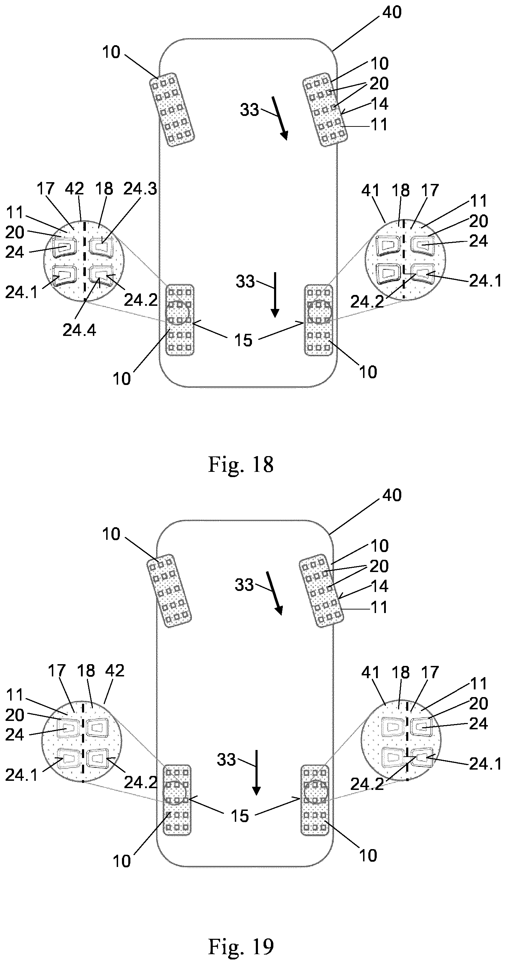

Fig. 18 zeigt in einer schematischen Darstellung in einer Ansicht von unten das in

Fig. 16 gezeigte Fahrzeug 40 mit vier Rädern, bei denen die mit einer dritten Spikeanordnung versehenen Reifen erfindungsgemäß ausgeführt sind.

In die Laufflächen 11 der Reifen 10 sind Spikes 20 eingesetzt, deren Spikepins 24 keine Symmetrieebene 25 aufweist. Die Kontur der Spikes 20 und der Spikepins 24 entspricht dabei der Kontur der in den Fig. 9 bis 11 gezeigten Spikes 20 bzw. Spikepins 24, es können jedoch auch beliebig andere Spikes 20 mit Spikepins 24 ohne Symmetrieebene 25 verwendet sein.

Die Lauffläche 11 der Reifen 10 ist jeweils in einen äußeren Laufflächenbereich 17 und einen inneren Laufflächenbereich 18 aufgeteilt, wie dies in Fig. 1 für einen asymmetrisch profilierten Reifen 10 gezeigt ist. Dabei ist der äußere Laufflächenbereich 17 zur Außenseite des Fahrzeugs 40 hin und der inneren Laufflächenbereich 18 zum Fahrzeug 40 hin angeordnet. In den benachbarten Laufflächenbereichen 17, 18 eines Reifens 10 sind spiegelbildlich zueinander ausgebildete und ausgerichtete Spikes 20 bzw. spiegelbildlich zueinander ausgebildete und ausgerichtete Spikepins 24 angeordnet. Innerhalb eines Laufflächenbereichs 17, 18 eines Reifens 10 sind gleiche Spikes 20 bzw. Spikepins 24 in gleicher Ausrichtung angeordnet. Die Spikes 20 benachbarter Laufflächenbereich 17, 18 stehen sich somit mit den in Drehrichtung des Reifens 10 gemessen kürzeren Innenseiten 24.2 ihrer Spikepins 24 gegenüber. Die vergleichsweise längeren Außenseiten 24.1 der Spikepins 24 sind der an den jeweiligen Laufflächenbereich 17, 18 angrenzenden Reifenflanke 14, 15 zugewandt. Die Außenseiten 24.1 der in dem äußeren Laufflächenbereich 17 angeordneten Spikepins 24 sind der äußeren Reifenflanke 14 und die Außenseiten 24.1 der in dem inneren Laufflächenbereich 18 angeordneten Spikepins 24 der inneren Reifenflanke 15 zugewandt. Die Trennlinie zwischen den Laufflächenbereichen 17, 18 und damit die Symmetrielinie für die Spikeausrichtung verläuft vorzugsweise in Umfangsrichtung entlang der Mittelebene des Reifens 10. Sie kann jedoch auch zu einer Reifenflanke 14, 15 hin verschoben angeordnet sein, sodass sich unterschiedlich breite Laufflächenbereiche 17, 18 ergeben. Dabei kann der Verlauf der Trennlinie an dem Profil 12 der Lauffläche 11 des Reifens 10 ausgerichtet sein. So kann die Trennlinie beispielsweise bei einem Reifen 10 mit einem asymmetrischen Profil 12, wie er in Fig. 1 gezeigt ist, zwischen zwei in Laufrichtung 33 nebeneinander angeordneten Profilformen des Reifens 10 angeordnet sein.

Ein mit einer derartigen Spikeanordnung ausgebildeter Reifen 10 weist eine gute Seitenführung, insbesondere bei wechselnder Kurvenfahrt, auf. Bei einer Kurvenfahrt wird der äußere Laufflächenbereich 17 des kurvenäußeren Reifens 10 durch die Neigung des Fahrzeugs 40 und die Verformung des Reifens 10 am stärksten belastet und auf den Boden gedrückt. Die zur Außenseite des Fahrzeugs 40 hin ausgerichteten, lang ausgeführten Außenseiten 24.1 der Spikepins 24 greifen dann, wie zuvor ausgeführt, gut in eine Schnee- oder Eisschicht ein und führen zu einer stabilen Seitenführung. Der innere Laufflächenbereich 18 des kurvenäußeren Reifens 10 ist auf Grund der Verformung des Reifens 10 im Vergleich zu seinem äußeren Laufflächenbereich 17 weniger stark belastete. Die in Richtung der wirkenden Fliehkräfte und, bezogen auf den Kurvenradius, nach außen ausgerichteten Innenseiten 24.2 der in dem inneren Lauflächenbereich 18 angeordnete Spikepins 24 dringen auf Grund ihrer im Vergleich zur Außenseite 24.1 verringerten Länge ebenfalls tief in eine Schnee- oder Eisschicht ein und tragen ebenfalls zu einer guten Seitenführung des kurvenäußeren Reifens 10 bei.

Beim kurveninneren Rad wird der innere Laufflächenbereich 18 stärker belastet als der dem Fahrzeug 40 abgewandte äußere Laufflächenbereich 17. Dadurch greifen die in Richtung der wirkenden Fliehkraft und damit zur inneren Reifenflanke 15 hin ausgerichteten, längeren Außenseiten 24.1 der in dem inneren Laufflächenbereich 18 angeordneten Spikepins 24 gut in eine Schnee- oder Eisschicht ein und auch die vergleichsweise kurzen Innenseiten 24.2 der in dem wenig belasteten äußeren Laufflächenbereich 17 des kurveninneren Reifens 10 angeordneten Spikepins 24 dringen noch so weit in eine Schnee- oder Eisschicht ein, dass sie zur Seitenführung des Reifens 10 und damit des Fahrzeugs 40 beitragen.

Ein Reifen 10 mit einer Spikeanordnung gemäß der Darstellung in Fig. 18 weist auf Grund der nicht vorhandenen Symmetrieebene 25 der Spikepins 24 eine vorgegebene Laufrichtung 33 auf. Die Laufrichtung 33 ist bei der gezeigten Form des Spikepins 24 dergestalt vorgegeben, dass die konvex geformte vierte Seite 24.3 des Spikepins 24 bei Vorwärtsfahrt vorauseilt und die gegenüberliegende, annähernd geradlinig verlaufende bzw. gering nach außen gewölbt verlaufende dritte Seite 24.3 des Spikepins 24 der vierten Seite 24.4 entsprechend nacheilt. Die Haftungseigenschaften des Reifens 10 sind durch die Formgebung der dritten und der vierten Seite 24.3, 24.4 des Spikepins 24 sowohl für einen Brems- wie auch für einen Beschleunigungsvorgang optimiert. Vorteilhaft kann ein derart mit Spikes 20 bestückter Reifen 10 auf beiden Seiten des Fahrzeugs 40 montiert werden, wenn sein Profil 12 entsprechend symmetrisch ausgebildet ist.

Fig. 19 zeigt in einer schematischen Darstellung in einer Ansicht von unten das in

Fig. 16 gezeigte Fahrzeug 40 mit vier Rädern, bei denen die mit einer vierten Spikeanordnung versehenen Reifen erfindungsgemäß ausgeführt sind.

Gleiche Teile sind wie zuvor eingeführt gleich bezeichnet.

Auch bei der in Fig. 19 gezeigten Spikeanordnung sind in zwei benachbart angeordneten Laufflächenbereichen 17, 18 spiegelbildlich zueinander ausgerichtete Spikes 20 mit spiegelbildlich zueinander ausgerichteten Spikepins 24 eingesetzt. Die Spikepins 24 weisen eine Symmetrieebene 25 auf, wie diese in den Fig. 4, 5, 7 und 8 gezeigt ist. Dabei entsprechen die in der Darstellung gewählten Spikes 20 in ihrer Form dem in den Fig. 3 bis 5 gezeigten Spike 20. Es ist jedoch auch denkbar, Spikes 20 bzw. Spikepins 24 mit einer von der gezeigten Form abweichenden Kontur zu verwenden, die eine zuvor beschriebene Symmetrieebene 25 aufweisen.

Die Spikes 20 sind derart in der Lauffläche 11 ausgerichtet, dass ihre Symmetrieachsen 25 quer zur Laufrichtung 33 der Reifen 10, vorliegend senkrecht zur Laufrichtung 33 der Reifen 10, ausgerichtet sind. Die in Umfangsrichtung des Reifens 10 verlängert ausgebildeten Außenseiten 24.1 sind im äußeren Laufflächenbereich 17 zur äußeren Reifenflanke 14 hin ausgerichtet. Die spiegelbildlich dazu ausgerichteten Spikepins 24 im inneren Laufflächenbereich 17 sind mit ihren verlängert ausgebildeten Außenseiten 24.1 zur angrenzenden inneren Reifenflanke 15 hin ausgerichtet. In einem Reifen 10 sind somit gleiche Spikes 20 in spiegelsymmetrisch Ausrichtung angeordnet. Die Spiegelebene ist vorzugsweise in der Reifenmitte angeordnet. Sie kann, wie bereits zu Fig. 18 dargelegt, auch am Profil 12 des Reifens 10 orientiert außerhalb der Reifenmitte verlaufen. Die Vorteile einer solchen Spikeanordnung, bezogen auf die Seitenführung eines Reifens 10, entsprechen den Darstellungen zu Fig. 18.

Vorteilhaft ist für einen Reifen 10 mit einer derartigen Spikeanordnung nur ein Spiketyp erforderlich. Durch die symmetrische Ausbildung der Spikes 20 bzw. der Spikepins 24 ergibt sich aus der Anordnung der Spikes 20 keine Vorgabe der Laufrichtung 33 des Reifens 10. Bei geeigneter Profilierung kann der Reifen 10 so auf beiden Seiten des Fahrzeugs 40 montiert werden.

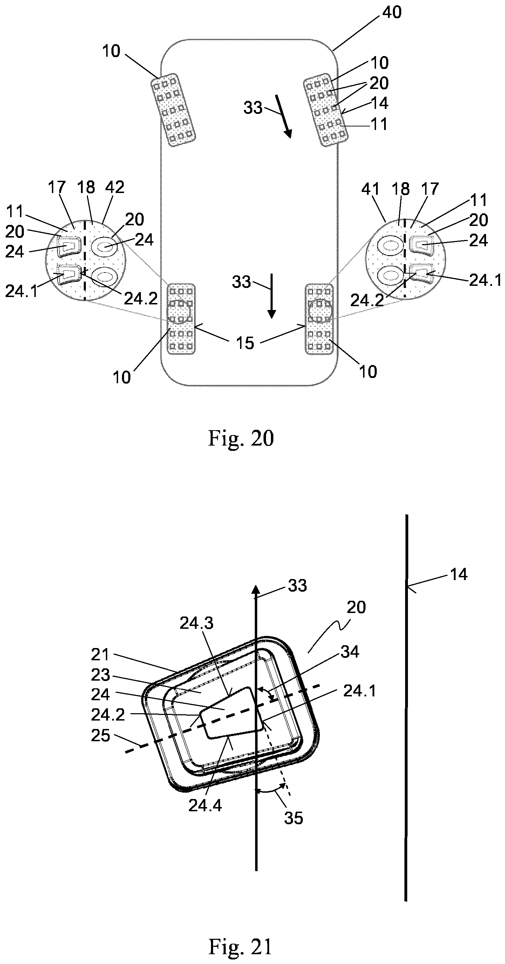

Fig. 20 zeigt in einer schematischen Darstellung in einer Ansicht von unten das in

Fig. 16 gezeigte Fahrzeug 40 mit vier Rädern, bei denen die mit einer fünften Spikeanordnung versehenen Reifen nicht erfindungsgemäß ausgeführt sind.

Die Lauffläche 11 ist, wie zuvor beschrieben, in 2 Laufflächenbereiche 17, 18 unterteilt, in denen unterschiedliche Spikes 20 angeordnet sind. Vorliegend sind in dem äußeren Laufflächenbereich 17 Spikes 20 angeordnet, die keine Symmetrieebene 25 aufweisen. Es ist jedoch auch denkbar, in dem äußeren Laufflächenbereich 17 Spikes 20 mit einer Symmetrieebene 25 anzuordnen. Die Spikes 20 im äußeren Laufflächenbereich 17 sind mit den verlängerten Außenseiten 24.1 ihrer Spikepins 24 zur äußeren Reifenflanke 14 hin ausgerichtet. Die Spikepins 24 der im inneren Laufflächenbereich 18 angeordneten Spikes 20 weisen vorliegend zwei Symmetrieebenen 25 auf. Sie sind oval ausgebildet. Es ist jedoch auch denkbar, im inneren Laufflächenbereich 18 Spikes 20 mit Spikepins 24 vorzusehen, die mehr als zwei Symmetrieebenen 25 aufweisen. So können beispielsweise Spikes 20 vorgesehen sein, deren Spikepins 24 einen kreisrunden Querschnitt aufweisen.

Die in Umfangsrichtung 30 des Reifens 10 verlaufende Trennebene zwischen dem äußeren und dem inneren Laufflächenbereich 17, 18 kann beliebig gewählt sein. Sie kann sich dabei am Profil 12 der Lauffläche 11 orientieren. So kann sie beispielsweise zwischen zwei unterschiedlich profilierten Bereichen der Lauffläche 11 angeordnet sein. Durch die im äußeren Laufflächenbereich 17 angeordneten Spikes 20 mit Spikepins 24, die eine oder keine Symmetrieebene 25 aufweisen und deren verlängerten Außenseiten 24.1 der äußeren Reifenflanke 14 zugewandt sind, wird, wie zuvor beschrieben, eine gute Seitenführung des Reifens 10 erreicht. Die im inneren Laufflächenbereich 17 angeordneten Spikes 20 wirken nicht oder nur wenig gerichtet und bewirken so in alle Richtung eine in etwa gleiche Verbesserung der Haftung des Reifens 10 auf glatten Untergründen.

Fig. 21 zeigt einen Ausschnitt einer Lauffläche 11 eines Reifens 10 mit einem schräg zu der Laufrichtung 33 des Reifens 10 ausgerichteten Spike 20. Der Spikepin 24 des Spikes 20 weist eine Symmetrieebene 25 auf. Diese ist gegenüber der Laufrichtung 33 des Reifens um einen Winkel α 34 geneigt angeordnet. Damit ist auch die Außenseite 24.1 des Spikepins 24 in einem Winkel β 35 schräg zur Laufrichtung 33 ausgerichtet. Die die im Vergleich zur Innenseite 24.2 verlängert ausgebildeten Außenseiten 24.1 des Spikepins 24 ist somit sowohl zur äußeren Reifenflanke 14 hin als auch in Laufrichtung 33 des Reifens 10 ausgerichtet. Durch diese Anordnung führt die verlängerte Außenseiten 24.1 zu einer verbesserten Haftung des Reifens 10 bei einer Kurvenfahrt und bei einer Beschleunigung.

Der Winkel α 34 der Symmetrieebene 25 gegenüber der Laufrichtung 33 des Reifens 10 liegt vorzugsweise in einem Bereich von 35° bis 90°. Durch geeignete Wahl des Winkels α 34 können die Haftungseigenschaften eines Reifens 10 für eine verbesserte Seitenführung oder für eine verbesserte Kraftübertragung bei einem Beschleunigungsvorgang optimiert werden.

Vorzugsweise ist die Ausrichtung der Spikes 20 und der darin gehaltenen Spikepins 24 an gegenüberliegend an einem Fahrzeug 40 montierten Reifen 10 spiegelbildlich.

Es ist auch denkbar, einen Spike 20 mit einem Spikepin 24, der keine Symmetrieebene 25 aufweist, schräg zur Laufrichtung 33 des Reifens 10 auszurichten. Durch die schräge Anordnung steht die Außenseite 24.1 des Spikepins 24 mit den beschriebenen Vorteilen schräg zur Laufrichtung 33 des Reifens 10.

Es ist weiterhin denkbar, die Spikes 20 derart schräg zur Laufrichtung 33 des Reifens 10 auszurichten, dass die Außenseiten 24.1 der Spikepins 24 zur äußeren Reifenflanke 14 und entgegen der Laufrichtung 33 weisen. Dadurch wird bei guter Seitenführung auch die Haftung des Reifens 10 bei einem Bremsvorgang verbessert.

Durch geeignete Kombination von Reifen 10 mit bestimmten Profilen 12 und erfindungsgemäßen Spikeanordnungen können die Haftungseigenschaften der Reifen 10 für verschiedene Anforderungen optimiert werden. So ist es denkbar, Reifen 10 mit einer asymmetrisch profilierten Lauffläche 11 vorzusehen, wobei der bei montiertem Reifen 10 zur Fahrzeugaußenseite hin ausgerichtete äußere Laufflächenbereich 17 eine erstes Profil 12 und der zur Fahrzeuginnenseite hin ausgerichtete innere Laufflächenbereich 18 ein zweites Profil 12 aufweist und wobei in die Lauffläche 11 des Reifens 10 Spikes 20 eingebettet sind, von denen jeweils ein Spikepin 24 über die Lauffläche 11 hervorsteht. Dabei kann es vorgesehen sein, dass in dem äußeren Laufflächenbereich 17 und in dem inneren Laufflächenbereich 18 unterschiedliche Spikes 20 angeordnet sind und/oder dass Spikes 20 mit Spikepins 24, die jeweils nur eine in Richtung der Längserstreckung des Spikepins 24 verlaufende oder keine Symmetrieebene 25 aufweisen, verwendet sind und dass die Spikepins 24 in dem äußeren Laufflächenbereich 17 und in dem inneren Laufflächenbereich 18 der Lauffläche 11 unterschiedlich ausgerichtet sind. Die Längserstreckung des Spikepins 24 verläuft dabei von seinem dem Reifen 10 zugewandten und in der Spikehülse eingeschlossenen Ende hin zu seinem dem Reifen 10 abgewandten äußeren Ende.

Auch ist es denkbar, Reifen 10 mit einer symmetrisch profilierten Lauffläche 11 vorzusehen, wobei das Profil 12 der Lauffläche 11 durch eine in Umfangsrichtung des Reifens 10 verlaufende Symmetriefläche in einen äußeren Laufflächenbereich 17 und einen inneren Laufflächenbereich 18 unterteilt ist und wobei in die Lauffläche 11 des Reifens 10 Spikes 20 eingebettet sind, von denen jeweils ein Spikepin 24 über die Lauffläche 11 hervorsteht. Dabei kann es vorgesehen sein, dass in dem äußeren Laufflächenbereich 17 und in dem inneren Laufflächenbereich 18 der Lauffläche 11 unterschiedliche Spikes 20 angeordnet sind und/oder dass Spikes 20 mit Spikepins 24, die jeweils nur eine in Richtung der Längserstreckung des Spikepins 24 verlaufende oder keine Symmetrieebene 25 aufweisen, verwendet sind und dass die Spikepins 24 in dem äußeren Laufflächenbereich 17 und in dem inneren Laufflächenbereich 18 der Lauffläche 11 unterschiedlich ausgerichtet sind.

Wie in Fig. 2 gezeigt ist es denkbar, die Lauffläche 11 eines Reifens 10 in einen äußeren und einen inneren Laufflächenbereich 17, 18 und einen dazwischenliegenden Übergangsbereich 19 aufzuteilen. In den äußeren und inneren Laufflächenbereichen 17, 18 können Spikeanordnung wie zuvor beschrieben vorgesehen sein. Im Übergangsbereich 19 können Spikes 20 mit Spikepins 24 angeordnet sein, die in ihrer Form und/oder ihrer Ausrichtung von den Spikepins 24 der in den Laufflächenbereichen 17, 18 angeordneten Spikes 20 abweichen. So können beispielsweise im Übergangsbereich Spikes 20 mit Spikepins 24 angeordnet sein, die zwei oder mehr Symmetrieebenen 25 aufweisen.

## Patentansprüche

1. Reifen (10) mit einer profilierten Lauffläche (11), mit einer bei montiertem Reifen (10) zur Fahrzeugaußenseite hin ausgerichteten äußeren Reifenflanke (14) und einer zur Fahrzeugseite hin ausgerichteten inneren Reifenflanke (15), wobei die äußere Reifenflanken (14) an einen äußeren Laufflächenbereich (17) der Lauffläche (11) und die innere Reifenflanke (15) an einen quer zur Drehrichtung des Reifens (10) mittelbar oder unmittelbar neben dem äußeren Laufflächenbereich (17) angeordneten inneren Laufflächenbereich (18) der Lauffläche (11) angrenzt, wobei in dem äußeren Laufflächenbereich (17) und in dem inneren Laufflächenbereich (18) der Lauffläche (11) des Reifens (10) Spikes (20) eingebettet sind, von denen jeweils ein Spikepin (24) über die Lauffläche (11) hervorsteht,
wobei bei den in dem äußeren Laufflächenbereich (17) angeordneten Spikes (20) die in Umfangsrichtung (30) des Reifens (10) gemessene Erstreckung der der äußeren Reifenflanke (14) zugewandten Außenseiten (24.1) der Spikepins (24) größer ist als die in Umfangsrichtung (30) gemessene Erstreckung der der inneren Reifenflanke (15) zugewandten Innenseiten (24.2) der Spikepins (24), **dadurch gekennzeichnet, dass**
die in dem inneren Laufflächenbereich (18) angeordneten Spikepins (24) spiegelbildlich zu den in dem äußeren Laufflächenbereich (17) angeordneten Spikepins (20) ausgebildet und/oder ausgerichtet sind.

2. Reifen (10) nach Anspruch 1, **dadurch gekennzeichnet, dass** die Spikepins (24) jeweils nur eine Symmetrieebene (25) aufweisen.

3. Reifen (10) nach Anspruch 2, **dadurch gekennzeichnet, dass** die Symmetrieebenen (25) der Spikepins (24) senkrecht zur Laufrichtung (33) des Reifens (10) ausgerichtet sind oder dass die Symmetrieebenen (25) in einem Winkel α (34) zwischen 30° und 90°, besonders bevorzugt zwischen 45° und 90°, zur Laufrichtung (33) des Reifens (10) ausgerichtet sind.

4. Reifen (10) nach Anspruch 1, **dadurch gekennzeichnet, dass** die Spikepins (24) keine Symmetrieebenen (25) aufweisen.

5. Reifen (10) nach einem der Ansprüche 1 bis 4, **dadurch gekennzeichnet, dass**
die der äußeren Reifenflanke (14) zugewandten Außenseiten (24.1) der Spikepins (24) parallel zur Laufrichtung (33) des Reifens (10) ausgerichtet sind oder dass die der äußeren Reifenflanke (14) zugewandten Außenseiten (24.1) der Spikepins (24) in einem Winkel β (35) zur Laufrichtung (33) des Reifens (10) ausgerichtet sind, vorzugsweise das die der äußeren Reifenflanke (14) zugewandten Außenseiten (24.1) der Spikepins (24) in einem Winkel β (35) zwischen 0 und 60°, besonders bevorzugt zwischen 0° und 45°, zur Laufrichtung (33) des Reifens (10) ausgerichtet sind.

6. Reifen (10) nach einem der Ansprüche 1 bis 5, **dadurch gekennzeichnet, dass** der Reifen (10) durch eine unterschiedliche Profilierung des inneren und des äußeren Laufflächenbereichs (17, 18) asymmetrisch ausgebildet ist.

7. Reifen (10) nach einem der Ansprüche 1 bis 6, **dadurch gekennzeichnet, dass** der Reifen (10) durch eine zueinander spiegelbildlich ausgebildete Profilierung des inneren und des äußeren Laufflächenbereichs (17, 18) symmetrisch ausgebildet ist.

8. Reifen (10) nach einem der Ansprüche 1 bis 7, **dadurch gekennzeichnet, dass** zwischen dem äußeren und dem inneren Laufflächenbereich (17, 18) ein mit Spikes (24) versehener Übergangsbereich (19) vorgesehen ist und dass die Form und/oder die Ausrichtung der Spikepins (24) der in dem Übergangsbereich (19) angeordneten Spikes (20) von der Form und/oder der Ausrichtung der Spikepins (24) der in dem äußeren und/oder dem inneren Laufflächenbereich (17, 18) angeordneten Spikes (20) abweicht.

9. Reifen (10) nach einem der Ansprüche 1 bis 8, **dadurch gekennzeichnet, dass** alle in dem äußeren Laufflächenbereich (17) angeordneten Spikes (20) gleich ausgebildet und ausgerichtet sind und/oder dass alle in dem inneren Laufflächenbereich (18) angeordneten Spikes (20) gleich ausgebildet und ausgerichtet sind und/oder dass alle in dem Übergangsbereich (19) angeordneten Spikes (20) gleich ausgebildet und ausgerichtet sind.

## Claims

1. Tire (10) with a profiled tread (11), with an outer tire sidewall (14) oriented toward the outside of the vehicle when the tire (10) is mounted and an inner tire sidewall (15) oriented toward the side of the vehicle, the outer tire sidewall (14) adjoining an outer tread surface region (17) of the tread (11) and the inner tire sidewall (15) adjoining an inner tread surface region (18) of the tread (11) arranged indirectly or directly next to the outer tread surface region (17) transversely to the direction of rotation of the tire (10), wherein spikes (20) are embedded in the outer tread surface region (17) and in the inner tread surface region (18) of the tread surface (11) of the tire (10), a spike pin (24) of each of which protrudes beyond the tread surface (11), wherein, in the case of the spikes (20) arranged in the outer tread surface region (17), the extent, measured in the circumferential direction (30) of the tire (10), of the outer sides (24.1) of the spike pins (24) facing the outer tire flank (14) is greater than the extent, measured in the circumferential direction (30), of the inner sides (24. 2) of the spike pins (24) facing the inner tire sidewall (15),
**characterized**
**in that** the spike pins (24) arranged in the inner tread region (18) are formed and/or aligned as mirror images of the spike pins (20) arranged in the outer tread region (17).

2. Tire (10) according to claim 1, **characterized in that** the spike pins (24) each have only one plane of symmetry (25).

3. Tire (10) according to claim 2, **characterized in that** the symmetry planes (25) of the spike pins (24) are aligned perpendicular to the running direction (33) of the tire (10) or **in that** the symmetry planes (25) are aligned at an angle α (34) between 30° and 90°, particularly preferably between 45° and 90°, to the running direction (33) of the tire (10).

4. Tire (10) according to claim 1, **characterized in that** the spike pins (24) do not have symmetry planes (25).

5. Tire (10) according to one of claims 1 to 4, **characterized in that** the outer sides (24.1) of the spike pins (24) facing the outer tire sidewall (14) are aligned parallel to the running direction (33) of the tire (10) or that the outer sides (24. 1) of the spike pins (24) facing the outer tire sidewall (14) are aligned at an angle β (35) to the running direction (33) of the tire (10), preferably that the outer sides (24.1) of the spike pins (24) facing the outer tire sidewall (14) are aligned at an angle β (35) between 0 and 60°, particularly preferably between 0° and 45°, to the running direction (33) of the tire (10).

6. Tire (10) according to any one of claims 1 to 5, **characterized in that** the tire (10) is designed asymmetrically by different profiling of the inner and outer tread surface regions (17, 18).

7. Tire (10) according to one of claims 1 to 6, **characterized in that** the tire (10) is symmetrically designed by a profiling of the inner and the outer tread surface region (17, 18) that is a mirror image of each other.

8. Tire (10) according to one of claims 1 to 7, **characterized in that** a transition region (19) provided with spikes (24) is provided between the outer and inner tread regions (17, 18), and **in that** the shape and/or the orientation of the spike pins (24) of the spikes (20) arranged in the transition region (19) deviates from the shape and/or the orientation of the spike pins (24) of the spikes (20) arranged in the outer and/or inner tread surface region (17, 18).

9. Tire (10) according to any one of claims 1 to 8, **characterized in that** all spikes (20) arranged in the outer tread surface region (17) are formed and aligned identically and/or that all spikes (20) arranged in the inner tread area (18) are formed and aligned identically and/or that all spikes (20) arranged in the transition area (19) are formed and aligned identically.

## Revendications

1. Pneu (10) avec une bande de roulement profilée (11), avec un flanc de pneu extérieur (14) orienté vers le côté extérieur du véhicule lorsque le pneu (10) est monté et un flanc de pneu intérieur (15) orienté vers le côté du véhicule, le flanc extérieur (14) du pneu étant adjacent à une zone extérieure (17) de la bande de roulement (11) et le flanc de pneu intérieur (15) étant adjacent à une zone intérieure (18) de la bande de roulement (11) disposée directement ou indirectement à côté de la zone extérieure (17) de la bande de roulement, transversalement au sens de rotation du pneu (10), dans lequel des clous (20) sont noyés dans la zone extérieure (17) et dans la zone intérieure (18) de la bande de roulement (11) du pneu (10), dont une broche à clous (24) dépasse respectivement de la bande de roulement (11), dans lequel, pour les clous (20) disposés dans la zone extérieure (17) de la bande de roulement, l'étendue, mesurée dans la direction circonférentielle (30) du pneu (10), des côtés extérieurs (24.1) des broches à clous (24), tournés vers le flanc de pneu extérieur (14), est supérieure à l'étendue, mesurée dans la direction circonférentielle (30), des côtés intérieurs (24.2) des broches à clous (24), tournés vers le flanc de pneu intérieur (15),
**caractérisé**
**en ce que** les broches à clous (24) disposées dans la zone intérieure (18) de la bande de roulement sont réalisées et/ou orientées de manière miroir par rapport aux broches à clous (20) disposées dans la zone extérieure (17) de la bande de roulement.

2. Pneu (10) selon la revendication 1, **caractérisé en ce que** les broches à clous (24) présentent chacune un seul plan de symétrie (25).

3. Pneu (10) selon la revendication 2, **caractérisé en ce que** les plans de symétrie (25) des broches à clous (24) sont orientés perpendiculairement à la direction de roulement (33) du pneu (10) ou **en ce que** les plans de symétrie (25) sont orientés selon un angle α (34) compris entre 30° et 90°, plus préférentiellement entre 45° et 90°, par rapport à la direction de roulement (33) du pneu (10).

4. Pneu (10) selon la revendication 1, **caractérisé en ce que** les broches à clous (24) ne présentent pas de plans de symétrie (25).

5. Pneu (10) selon l'une des revendications 1 à 4, **caractérisé en ce que** les côtés extérieurs (24.1) des épingles (24) tournés vers le flanc de pneu extérieur (14) sont orientés parallèlement à la direction de roulement (33) du pneu (10) ou **en ce que** les côtés extérieurs (24. 1) des broches à clous (24) sont orientées selon un angle β (35) par rapport à la direction de roulement (33) du pneu (10), de préférence que les côtés extérieurs (24.1) des broches à clous (24) tournés vers le flanc de pneu extérieur (14) sont orientés selon un angle β (35) compris entre 0 et 60°, de manière particulièrement préférée entre 0° et 45°, par rapport à la direction de roulement (33) du pneu (10).

6. Pneu (10) selon l'une des revendications 1 à 5, **caractérisé en ce que** le pneu (10) est asymétrique par un profilage différent de la zone intérieure et de la zone extérieure (17, 18) de la bande de roulement.

7. Pneu (10) selon l'une quelconque des revendications 1 à 6, **caractérisé en ce que** le pneu (10) est réalisé de manière symétrique par un profilage de la zone intérieure et de la zone extérieure (17, 18) de la bande de roulement réalisé de manière miroir l'une par rapport à l'autre.

8. Pneu (10) selon l'une des revendications 1 à 7, **caractérisé en ce qu'**une zone de transition (19) pourvue de clous (24) est prévue entre la zone extérieure et la zone intérieure (17, 18) de la bande de roulement et **en ce que** la forme et/ou l'orientation des broches à clous (24) des clous (20) disposés dans la zone de transition (19) diffère de la forme et/ou de l'orientation des broches à clous (24) des clous (20) disposés dans la zone extérieure et/ou intérieure (17, 18) de la bande de roulement.

9. Pneu (10) selon l'une quelconque des revendications 1 à 8, **caractérisé en ce que** tous les clous (20) disposés dans la zone extérieure (17) de la bande de roulement sont de forme et d'orientation identiques et/ou **en ce que** tous les clous (20) disposés dans la zone intérieure (18) de la bande de roulement sont de forme et d'orientation identiques et/ou **en ce que** tous les clous (20) disposés dans la zone de transition (19) sont de forme et d'orientation identiques.
